# EUROPÄISCHE PATENTANMELDUNG

(11) **EP 1 892 980 A1**
(43) Veröffentlichungstag der Anmeldung: **27.02.2008**
(21) Anmeldenummer: 06017664.1
(22) Anmeldetag: 24.08.2006
(51) Int. Cl.: H04Q 7/38

(54) **Verfahren und Endgerät zum automatisierten Hinzuschalten von Diensten zu einer existierenden Gruppensitzung in einem 3GPP-basierten Netz**

(71) Anmelder: Nokia Siemens Networks GmbH & Co. KG, 81541 München (DE)
(72) Erfinder: Milinski, Alexander, 81371 München (DE); Ottensmeyer, Jörg, 85635 Höhenkirchen (DE); van den Broek, Eduardus, 82223 Eichenau (DE)

(57) **Zusammenfassung**

Die Erfindung betrifft Vorrichtungen und ein Verfahren, um in einem Telekommunikationsnetz, in dem bereits ein erster Dienst (A) für mehrere Teilnehmer (T1,T2,T3) eines Telekommunikationsnetzes gestartet ist, einen weiteren Dienst (C) zu starten,
dadurch gekennzeichnet, dass ein Teilnehmer (T1) des ersten Dienstes einen Multimedia Konferenz Service (B) und/oder einen den aktuellen Dienst (A) unterstützenden Server (/A) unter Angabe einer den ersten Dienst (A) repräsentierenden Dienstreferenzangabe zum Anbieten weiterer Dienste (C) veranlasst (1),
worauf der Multimedia Konferenz Service (B) die Geräte-Fähigkeiten (23.279 Device Capabilities) der Teilnehmer (T1,T2,T3) des ersten Dienstes (A) erfragt (2) und die Geräte-Fähigkeiten von Teilnehmern (T1,T2,T3) anderen Teilnehmern (T1,T2,T3) mitteilt,
worauf, wenn der Multimediakonferenzservice (B) einen Verbindungsaufbauwunsch eines Teilnehmers (T1) betreffend einen der angebotenen weiteren Dienste (/C) erhält (4), der Multimediakonferenzservice (B) eine Nachricht mit einer Aufforderung zur Ausführung des weiteren Dienstes (C) an einen Server (/C) sendet (5,6).

## Beschreibung

Die Erfindung betrifft Verfahren und Vorrichtungen zum Starten von Diensten.

In 3GPP-basierten Mobilfunknetzen werden Sprachverbindungen über den leitungsvermittelten Teil (CS-Domain) abgewickelt während Multimediadienste, die auf dem IMS basieren, über den paketvermittelten Teil (PS-Domain) angeboten werden. 3GPP beschreibt nun in der (z.B. unter www.3gpp.org erhältlichen) Spezifikation [23.279], wie man zu einer bestehenden Sprachverbindung einen Multimedia Dienst oder auch eine Sprachverbindung zu einem Multimedia Dienst hinzuschalten kann. Dieses wird als "Combinational Services" bezeichnet. Dazu handeln die Endgeräte bilateral die Device Capabilities (= Fachwort für Fähigkeiten oder Eigenschaften von Geräten, insbesondere von Endgeräten, im folgenden auch "Geräte-Fähigkeiten" genannt), wie z.B. welche Video-Codecs verfügbar sind, aus, um dem Nutzer dann automatisiert weitere mögliche Dienste anzubieten.

Bei Sitzungen über einen Gruppenserver (z.B. eine Konferenzbridge für Dial-in oder Dial-Out Konferenzen) ergibt sich die Schwierigkeit, dass die Sitzungsteilnehmer nicht die Rufnummern der anderen Teilnehmer sehen und auch keine direkte Beziehung untereinander unterhalten. Daher eignet sich die bisher bekannte Form des Verfahrens nicht dafür, dass Endgeräte basierend darauf weitere Dienste zu einer Sitzung hinzuschalten können.

Eine Aufgabe besteht also darin, den Endgeräten zu ermöglichen, dass einfach und effizient während einer Sitzung zusätzliche Gruppendienste gestartet werden können. Die Aufgabe wird durch die in den unabhängigen Patentansprüchen angegebene Erfindung gelöst.

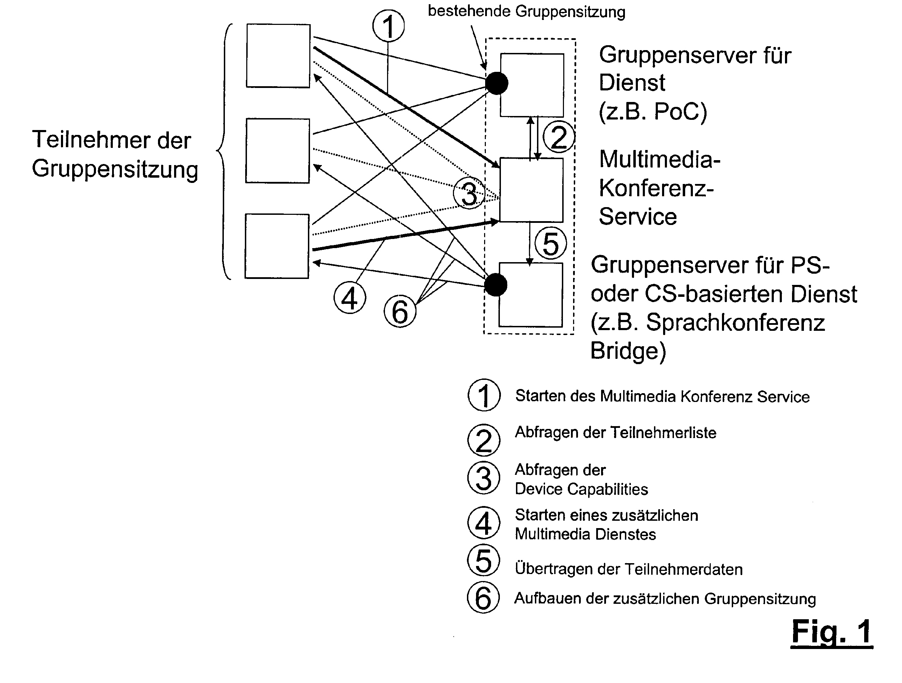

Weitere Merkmale und Vorteile ergeben sich aus den Patentansprüchen und der nachfolgenden Beschreibung eines Ausführungsbeispiels anhand der Zeichnung. Dort zeigt
Fig. 1: schematisch ein Beispiel eines erfindungsgemäßen Ablaufs.

Die Erfindung ermöglicht es, einen speziellen Konferenz-Multimedia Service aufzusetzen, der wie folgt arbeitet: (die Nummerierung bezieht sich auf die beiliegende Zeichnung)

Die in der Fig. 1 dargestellten Elemente sind drei Teilnehmer (also deren Endgeräte) T1, T2, T3 eines Dienstes (z.B. eines paketvermittelten (PS) oder leitungsvermittelten (CS) Dienstes,
z.B. eines Gruppenrufdienstes oder Multimediadienstes etc), ein Gruppenserver A für einen Dienst (wie z.B. einen Push-To-Talk-over-Cellular = PoC Dienst etc.), ein Multimedia Konferenz Service B und ein Gruppenserver C (z.B. eine Sprachkonferenz- Brücke) für einen PS- oder CS- basierten Dienst. Im Folgenden werden Gruppendienste betrachtet, die auf einem Gruppenserver beruhen.
(1) Ein Teilnehmer T1 eines Gruppendienstes A beauftragt den Multimedia Konferenz Service B unter Angabe einer Dienstreferenz (im folgenden kurz "Referenz" genannt) betreffend einen aktuell ablaufenden ersten Dienst (eine aktuellen Sitzung, an der er beteiligt ist), und-den Gruppenserver, der diese Sitzung bedient, das automatische Anbieten weiterer Dienste anzustoßen. Diese Referenz besteht beispielsweise für eine Telefonkonferenz aus der Einwahlnummer und der Gruppen-Kennung.
   Der Aufruf des Multimedia Konferenz Services B kann auch indirekt über den Gruppendienst A erfolgen. Beispielsweise könnte eine spezielle Tastenkombination (z.B. über DTMF Töne) während einer Sprachkonferenz dafür sorgen, dass Teilnehmerdaten an den Konferenz Multimedia Service übertragen werden, d.h. das Ergebnis des Schrittes 2 liegt in diesem Falle vor, und dadurch wird der Schritt 3 gestartet.
(2) Der Multimedia Konferenz Service B fragt die Teilnehmerdaten der Sprach-Konferenz (z.B. eine Liste der MSISDNs oder SIP-URIs der an der Sprach-Konferenz teilnehmenden Teilnehmer T1, T2, T3) von dem Gruppenserver A ab.
   Der Konferenz Multimedia Service B kann z.B. auf dem Sitzungsserver A selbst implementiert sein, oder ein vorhandenes bzw. zu erweiterndes Steuerinterface nutzen, um die in Schritt 3 benötigten Daten zu erhalten.
(3) Der Konferenz-Multimedia Service B nutzt das z.B. im aktuellen Standard 3GPP beschriebene Verfahren, um bilateral die Device Capabilities (=Geräte-Fähigkeiten) aller Konferenzteilnehmer T1, T2, T3 zu bestimmen.
   Diese Device Capabilities enthalten z.B. gemäß [23.279], die folgenden Informationen:
   - IMS Media Typen (IMS Media types), welche als IMS Media Ströme (IMS media streams) unterstützt werden können (also Media Komponenten Definitionen von IMS Sessions).
   - Media Format Parameter für unterstützte IMS Media Typen (Codecs, Media File Formate etc.).
   - MSISDN und bevorzugte SIP URI für das UE, das die UE Capability Information sendet.
   Die bevorzugte SIP URI ("preferred SIP URI") kann auch auf ein anderes Gerät (als beispielsweise T1, T2 oder T3) verweisen, so dass der Nutzer die Möglichkeit hat zu bestimmen, welche Dienste er über welches Gerät nutzen möchte.
   Der Multimedia Konferenz Service (Server B) übernimmt dabei hier die Rolle eines Endgerätes, damit das von 3GPP beschriebene Verfahren direkt angewendet werden kann. Der Konferenz-Multimedia Service B antwortet den Endgeräten dann mit der Vereinigungsmenge der erhaltenen "Device Capabilities" der teilnehmenden Teilnehmer-Endgeräte T1, T2, T3. Nach Abschluss dieser Phase kennen die Endgeräte die Dienste, die von allen Teilnehmern unterstützt werden.
   Der Multimedia Konferenz Service könnte auch alternative Strategien bei der Auswahl der angebotenen Dienste verwenden, z.B. nur solche Dienste anbieten, die von zwei oder mehr Teilnehmern genutzt werden können, die über die gleichen Capabilities verfügen, so dass für diese ein Multimedia Dienst gestartet werden kann.
(4) Möchte ein Teilnehmer einen der angebotenen weiteren Dienste zusätzlich nutzen, sendet er einen Verbindungsaufbauwunsch an den Multimedia Konferenz Service B.

(5+6) Der Konferenz-Multimedia Service B sendet eine Aufforderung an den Gruppenserver C (inkl. einer Liste der Kontaktdaten der Konferenzteilnehmer T1, T2, T3), um den gewünschten weiteren Dienst per "3rd Party Call Control" (Funktion zur Anrufsteuerung für eine dritte Partei) aufzubauen.

Für ein Endgerät reicht es wenn es das das in [3GPP 23.279] beschrienen Verfahren zu implementiert. Kombinierte Dienste können dann auch während einer beliebigen Konferenz automatisch angeboten und aufgebaut werden.

Das beschriebene Verfahren des "Konferenz-Multimedia Service" ist z.B. auch dann anwendbar, wenn es Teilnehmer gibt, die nicht über ein DTM (Dual Transfer Mode) 3GPP Netz (mit PS und CS Verbindung) sondern über eine IP Verbindung angebunden sind.

## Patentansprüche

1. Verfahren um in einem Telekommunikationsnetz, in dem bereits ein erster Dienst (/A) für mehrere Teilnehmer (T1, T2, T3) eines Telekommunikationsnetzes gestartet ist, einen weiteren Dienstes (/C) zu starten,
**dadurch gekennzeichnet,**
**dass** ein Teilnehmer (T1) des ersten Dienstes einen Multimedia Konferenz Service (B) und/oder einen den aktuellen Dienst ( A) unterstützenden Server unter Angabe einer den ersten Dienst (A) repräsentierenden Dienstreferenzangabe zum Anbieten weiterer Dienste (C) veranlasst (1), worauf der Konferenzmultimediaservice (B) die Geräte-Fähigkeiten (23.279 Device Capabilities) der Teilnehmer (T1, T2, T3) des ersten Dienstes (A) erfragt (2) und die Geräte-Fähigkeiten von Teilnehmern (T1, T2, T3) anderen Teilnehmern (T1, T2, T3) mitteilt,
worauf, wenn der Multimediakonferenzservice (B) einen Verbindungsaufbauwunsch eines Teilnehmers (T1) betreffend einen der angebotenen weiteren Dienste (C) erhält (4),
der Multimediakonferenzservice (B) eine Nachricht mit einer Aufforderung zur Ausführung des weiteren Dienstes (/C) an einen Server (C) sendet (5, 6).

2. Verfahren nach Anspruch 1,
**dadurch gekennzeichnet, dass** bevor der Konferenzmultimediaservice (B) die Geräte-Fähigkeiten (23.279 Device Capabilities) der Teilnehmer (T1, T2, T3) des ersten Dienstes erfragt, der Konferenzmultimediaservice (B) eine Teilnehmerliste der Teilnehmer (T1, T2, T3) des ersten Dienstes bei einem Server (A) des ersten Dienstes erfragt (2).

3. Verfahren nach einem der vorhergehenden Ansprüche,
**dadurch gekennzeichnet, dass** der erste Dienst (A) leitungsvermittelt (CS) realisiert ist und dass der weitere Dienst (C) paketvermittelt (PS) oder leitungsvermittelt (CS) realisiert ist.

4. Verfahren nach einem der vorhergehenden Ansprüche,
**dadurch gekennzeichnet, dass** der erste Dienst (A) paketvermittelt (PS) realisiert ist und
dass der weitere Dienst (C) paketvermittelt (PS) oder leitungsvermittelt (CS) realisiert ist.

5. Verfahren nach einem der vorhergehenden Ansprüche,
**dadurch gekennzeichnet, dass** der erste Dienst (A) und/oder der weitere Dienst (B) ein Gruppenrufdienst ist.

6. Verfahren nach einem der vorhergehenden Ansprüche,
**dadurch gekennzeichnet, dass** der erste Dienst (A) und/oder der weitere Dienst (B) ein Multimediadienst ist.

7. Verfahren nach einem der vorhergehenden Ansprüche,
**dadurch gekennzeichnet, dass** der erste Dienst (A) und/oder der weitere Dienst (B) ein Push-to-talk-Service ist.

8. Verfahren nach einem der vorhergehenden Ansprüche,
**dadurch gekennzeichnet, dass** eine Dienstreferenzangabe betreffend den ersten Dienst und/oder den weiteren Dienst eine Telefonkonferenzeinwahlnummer und/oder eine Gruppenkennung enthält.

9. Verfahren nach einem der vorhergehenden Ansprüche,
**dadurch gekennzeichnet, dass** ein Anruf des Multimediaservice (B) direkt über einen Gruppendienst (A), insbesondere über Tastentöne, insbesondere DTMF, vermittelt wird

10. Verfahren nach einem der vorhergehenden Ansprüche,
**dadurch gekennzeichnet, dass** der erste Dienst beendet wird, wenn der weitere Dienst gestartet ist, insbesondere dass ein erster Dienst in Form eines Push-To-Talk-Service durch einen weiteren Dienst in Form eines Gruppenrufs ersetzt wird oder umgekehrt.

11. Endgerät zur Durchführung des Verfahrens nach einem der vorhergehenden Ansprüche.
